# EUROPÄISCHE PATENTSCHRIFT

(11) **EP 0 487 928 B1**
(45) Veröffentlichungstag und Bekanntmachung des Hinweises auf die Patenterteilung: **22.03.1995**
(21) Anmeldenummer: 91118601.3
(22) Anmeldetag: 31.10.1991
(51) Int. Cl.: B60G 17/056, B62D 61/12

(54) **Baueinheit zum Steuern einer Liftachse an einem mehrachsigen Nutzfahrzeug**
Control assembly for a lifting axle of a multiple axle utility vehicle
Bloc de commande d'un essieu relevable pour véhicule utilitaire à plusieurs essieux

(30) Priorität: 24.11.1990 DE 4037461
(43) Veröffentlichungstag der Anmeldung: 03.06.1992
(73) Patentinhaber: GRAU GMBH, D-69123 Heidelberg (DE)
(72) Erfinder: Blanz, Roland, W-6901 Heiligkreuzsteinach (DE)
(74) Vertreter: Rehberg, Elmar, Dipl.-Ing.

(56) Entgegenhaltungen:
- DE-B- 1 916 236
- DE-C- 3 734 618
- DE-C- 3 742 021
- DE-C- 3 809 338
- FR-A- 2 281 849

## Beschreibung

Die Erfindung bezieht sich auf eine Baueinheit zum steuern einer Liftachse an einem mehrachsigen Nutzfahrzeug, mit einem manuell betätigbaren Achsliftventil, einem automatischen Regelventil, zwei jeweils einer Fahrzeugseite zugeordneten Umschaltventilen und einem Dämpfungsbehälter sowie den zugehörigen Leitungsverbindungen für die Schaltelemente und den Dämpfungsbehälter. Solche Baueinheiten dienen zum Ausrüsten von Kraftfahrzeugen, und zwar als Zugfahrzeuge, Sattelauflieger, Anhängefahrzeuge u. dgl. Ein solches Nutzfahrzeug weist mindestens eine Fahrachse und eine Liftachse auf, die in der vollbeladenen Stellung abgesenkt ist, während sie in der Beladungsstellung Leer des Fahrzeugs über das manuell betätigbare Achsliftventil angehoben oder auch abgesenkt werden kann. Die Baueinheit ist unabhängig davon einsetzbar, ob sie in Verbindung mit einem beiden Fahrzeugseiten zugeordneten Niveauregelventil oder mit zwei jeweils einer Fahrzeugseite zugeordneten Niveauregelventilen eingesetzt wird.

Eine Baueinheit der eingangs beschriebenen Art mit den Merkmalen des Oberbegriffs des Anspruchs 1 ist bekannt. Es handelt sich um einen sog. Achsliftkasten, der eine Grundplatte aufweist, auf der die einzelnen Schaltelemente jeweils in Einzelausbildung angeordnet sind, wie aus dem Firmenprospekt der Metaalcompagnie Brabant aus dem Jahr 1988 hervorgeht. Jedes Schaltelement, z. B. das manuell betätigbare Achsliftventil, das automatische Regelventil usw. besitzt sein eigenes, separates Gehäuse, mit dem es auf der Grundplatte befestigt ist. Auch ein Dämpfungsbehälter, der zur Aufnahme von Druckluft dient, ist auf diese Art und Weise auf der Grundplatte befestigt. Die Schaltelemente und der Dämpfungsbehälter sind über eine Vielzahl von Rohrleitungsstücken mit den zugehörigen Verschraubungen in der erforderlichen Weise miteinander verbunden, so daß die erforderliche Funktion erreicht wird. Das Achsliftventil ist über zwei Schalter betätigbar, wobei der eine Schalter für das Anheben der Liftachse und der andere Schalter für das Absenken der Liftachse bestimmt und ausgebildet ist. Die Grundplatte mit den Schaltelementen und dem Dämpfungsbehälter ist von einem Abdeckgehäuse umgeben, um die Baueinheit, die am Fahrzeug außerhalb der Fahrerkabine angeordnet ist, vor Witterungseinflüssen und Verschmutzung zu schützen. Eine solche gesamte Baueinheit wird auch als Achsliftkasten bezeichnet. Die Herstellung und der Aufbau dieser Baueinheit ist sehr aufwendig. Jedes Schaltelement muß mit seinem zugehörigen Gehäuse gefertigt, auf der Grundplatte montiert und über die Rohrleitungsabschnitte in der erforderlichen Weise verschraubt werden. Auch das Abdeckgehäuse stellt einen zusätzlichen Aufwand dar.

Aus der Druckschrift der Fa. Grau GmbH, Heidelberg, Ausgabe IAA 1987, ist innerhalb einer Darlegung "IAA 87: Neuentwicklungen" auf den S. 14 bis 18 u. a. ein manuell betätigbares Achsliftventil innerhalb einer Luftfederanlage bekannt. Dieses Achsliftventil weist ein Gehäuse auf, in dem ein verschiebbar gelagerter Schaltkolben mit Hilfe von drei Dichtungen geführt ist, der eine nach außen aus dem Gehäuse des Achsliftventils herausragende Schaltstange trägt, die in ein manuell verschiebbares Betätigungsglied übergeht. Das Gehäuse des Achsliftventils weist einen Anschluß für eine zu einem Liftbalg und einem Umschaltventil für einen Federbalg der Liftachse führende Leitung auf. An einem weiteren Anschluß steht Druckluft aus einem Druckluftvorratsbehälter an. Ein dritter Anschluß führt über eine Steuerleitung zu einem Federbalg der nicht-liftbaren Achse, so daß hier als Steuerdruck der Druck in dem Federbalg der nicht-liftbaren Achse - entsprechend der Beladung des Fahrzeugs - einwirkt. Das Gehäuse des Achsliftventils ist mit einer eigenen Entlüftungsöffnung versehen. Zusätzlich zu diesem manuell betätigbaren Achsliftventil ist in der Luftfederanlage ein pneumatisch gesteuertes Regelventil vorgesehen, welches einen Schaltkolben aufweist, der gegenüber einer einstellbaren Feder gehäuseseitig abgestützt ist und eine Wirkfläche besitzt, die vom Druck im Federbalg einer nicht-liftbaren Achse beaufschlagt ist. Dieses pneumatisch gesteuerte, automatische Regelventil ist somit in die Steuerleitung von der nicht-liftbaren Achse zu dem manuell betätigbaren Achsliftventil eingeschaltet. Es weist einen Umschaltpunkt auf, durch den ein niederer von einem höheren Druckbereich getrennt ist. Im niederen Druckbereich, also bei leerem oder nur geringfügig beladenem Fahrzeug, ist die Steuerleitung entlüftet, so daß der Schaltkolben des Achsliftventils normalerweise sich in der Stellung befindet, in der Druckluft aus einem Vorratsbehälter in die zu dem Liftbalg der liftbaren Achse führende Leitung ansteht, so daß die Liftachse angehoben ist. Bei leerem oder wenig beladenem Fahrzeug führt eine manuelle Betätigung des Betätigungsglieds der Schaltstange und des Schaltkolbens am Achsliftventil zu einem Absenken bzw. Anheben der Liftachse. Wenn dagegen das Fahrzeug mehr beladen ist, als es dem Umschaltpunkt des automatisch gesteuerten Regelventils entspricht, dann wird der Steuerkolben durch den einwirkenden Druck des Federbalgs der nicht-liftbaren Achse so verschoben, daß dieser Druck als Steuerdruck an dem manuell betätigbaren Achsliftventil anliegt, so daß dessen Schaltkolben in die andere Stellung verschoben wird, in die der Liftbalg entlüftet und damit die Liftachse abgesenkt wird. Gleichzeitig werden die Federbälge der Liftachse über zwei zugeordnete Umschaltventile entsprechend beaufschlagt.

Auch in diesem beladenen Zustand des Fahrzeugs ist es möglich, das manuell betätigbare Achsliftventil manuell zu betätigen, und zwar auch gegen den am Schaltkolben einwirkenden Steuerdruck. Dieses manuelle Umschalten des Achsliftventils mag für verschiedene Anwendungsfälle sinnvoll sein, z. B. als Anfahrhilfe im Winter bei Kraftwagen. Es wird dabei durch Anheben der Liftachse eine andere Gewichtsverteilung der Beladung an den nicht-liftbaren Achsen herbeigeführt, die jedoch in nachteiliger Weise zu einer Überlastung der betreffenden Fahrachse bzw. Fahrachsen führt. Diese Überlastung wird zwar in der Regel nur kurzzeitig herbeigeführt, weil beim Loslassen der Schaltstange der in der Steuerleitung anstehende Druck selbsttätig eine Umschaltung des Achsliftventils in der Weise herbeiführt, daß die Liftachse wieder abgesenkt wird. Trotzdem ist eine Überlastung nicht-liftbarer Achsen grundsätzlich nachteilig. Fehlbedienungen können darüberhinaus zu Schäden an den nichtliftbaren Achsen führen. Im übrigen ist eine Verletzungsgefahr beispielsweise an einem solchen spielender Kinder dann besonders groß, wenn die manuelle Betätigbarkeit gerade auch dann gegeben ist, wenn das Fahrzeug schwer oder voll beladen ist.

Außerdem ist nachteilig, daß das manuell betätigbare Achsliftventil immer zusammen mit dem pneumatisch gesteuerten, automatischen Regelventil in einer Anlage eingesetzt werden muß, wenn die normalen Schaltfunktionen erreicht werden sollen. Dies bedeutet einen gewissen Aufwand, auch hinsichtlich der Anschlüsse und der Rohrleitungsverbindungen, die zwischen dem manuell betätigbaren Achsliftventil und dem Regelventil erforderlich sind.

Aus der DE-PS 37 34 618 ist ein manuell betätigbares Achsliftventil bekannt, bei dem trotz manueller Betätigbarkeit eine Überlastung der nicht-liftbaren Achse bzw. Achsen - auch kurzzeitig - nicht möglich ist. Dies wird dadurch erreicht, daß das manuell betätigbare Achsliftventil und das automatische Regelventil baulich zu einer Einheit vereinigt werden und die geometrische Gestaltung der Wirkflächen in Verbindung mit den einwirkenden Drücken so gestaltet wird, daß es oberhalb des Umschaltpunkts des Regelventils, also bei vollbeladenem oder schwer beladenem Fahrzeug, nicht mehr möglich ist, die Liftachse anzuheben. Bei leerem oder wenig beladenem Fahrzeug unterhalb des Umschaltpunkts ist es dagegen möglich, das manuell betätigbare Achsliftventil in seine beiden Stellungen zu überführen, also die Liftachse willkürlich anzuheben oder abzusenken.

Es ist weiterhin eine Bremsanlage für zwei Fahrachsen in Verbindung mit einer Liftachse bekannt, bei der eine Integration aus einem manuell betätigbaren Achsliftventil und zwei jeweils einer Fahrzeugseite zugeordneten Umschaltventilen vorgesehen ist. Als singuläre Anlagenteile sind dabei innerhalb der Anlage und durch entsprechende Rohrleitungen und Verschraubungen verbunden ein automatisches Regelventil, ein Schnellöseventil, ein Dämpfungsbehälter und ein Zweiwegeventil vorgesehen. Diese genannten Schaltelemente sind innerhalb einer Anlage mit entsprechenden Rohrleitungsverbindungen sowie in Verbindung mit zwei Niveauregelventilen vorgesehen, wobei jedes Niveauregelventil jeweils einer Fahrzeugseite zugeordnet ist. Auch hierbei ist der Herstellungs- und Montageaufwand, insbesondere für die Rohrleitungen und die Verschraubungen, relativ groß.

Der Erfindung liegt die Aufgabe zugrunde, eine Baueinheit der eingangs beschriebenen Art zu schaffen, die gleichsam als singuläres Anlagenteil die notwendigen Funktionen erfüllen kann, die bisher nur durch eine Anlage mit mehreren singulären Bauteilen und entsprechenden Rohrleitungsverbindungen möglich waren.

Erfindungsgemäß wird dies dadurch erreicht, daß sämtliche Schaltelemente sowie der Dämpfungsbehälter in einem gemeinsamen Gehäuseblock untergebracht sind und die Leitungsverbindungen als Bohrungen im Gehäuseblock ausgebildet sind. Die neue Baueinheit enthält mindestens ein manuell betätigbares Achsliftventil zum willkürlichen Heben und Senken der Liftachse relativ zur Fahrachse, ein automatisches Regelventil, welches pneumatisch vom Balgdruck einer Fahrachse angesteuert wird und selbsttätig entsprechend den beiden sich an den Umschaltpunkt anschließenden Druckbereichen die Liftachse anhebt oder absenkt. Weiterhin sind mindestens zwei, jeweils einer Fahrzeugseite zugeordnete Umschaltventile Bestandteil der Baueinheit, wobei diese Umschaltventile als Drei/Zwei-Wege-Ventile den Bälgen der Liftachse vorgeschaltet sind. Außerdem ist auch der Dämpfungsbehälter als Bohrung im gemeinsamen Gehäuseblock untergebracht. Es kommen somit nicht nur die einzelnen Gehäuse der Schaltelement aus dem Stand der Technik, sondern auch noch die dort eingesetzte Grundplatte und das Abdeckgehäuse in Fortfall, ebenso wie die zahlreichen Rohrleitungen und deren Verschraubungen mit den Schaltelementen. Selbst der Dämpfungsbehälter wird von dem gemeinsamen Gehäuseblock gebildet. Mit der neuen Baueinheit ist es nicht nur möglich, die Herstellung und die Montage wesentlich zu vereinfachen, zusätzlich wird die Baueinheit in ihren äußeren Abmessungen auch noch wesentlich kleiner als der im Stand der Technik bekannte Achsliftkasten. Der Gehäuseblock bildet dabei nicht nur die Gehäuse der singulären Anlagenteile, sondern funktionsmäßig zugleich die Grundplatte und das Abdeckgehäuse des Achsliftkastens. Damit wird eine Totalintegration geschaffen, in die auch solche Teile eingeschlossen sind, die üblicherweise nicht integriert werden.

Das manuell betätigbare Achsliftventil kann vorteilhaft ein einziges, in zwei Stellungen überführbares Betätigungsglied aufweisen. Es erübrigt sich somit die Anordnung zweier Druckschalter, da das Betätigungsglied selbst und damit die Steuerstange des Achsliftventils in die beiden Stellungen durch Einschieben bzw. Herausziehen aus dem Gehäuseblock verschiebbar ist. Gleichzeitig wird es damit möglich, dem manuell betätigbaren Achsliftventil bzw. dessen Steuerstange eine Wirkfläche zuzuordnen, die in der abgesenkten Stellung der Liftachse vom Balgdruck einer Fahrachse beaufschlagt ist, so daß die Liftachse in der Stellung schwer oder vollbeladen des Fahrzeugs willkürlich nicht angehoben werden kann.

Am Gehäuseblock kann eine gemeinsame Entlüftungsöffnung für alle Schaltelemente vorgesehen sein. Dies vereinfacht die Herstellung weiterhin. Außerdem ist dabei nur eine einzige Entlüftungsöffnung gegen Eindringen von Schmutz zu schützen.

Als gemeinsamer Gehäuseblock kann insbesondere ein Abschnitt eines Strangpreßprofils vorzugsweise aus einer Aluminiumknetlegierung dienen. Ein rechteckiges Strangpreßprofil der Abmessung 140 mm x 40 mm reicht aus, um davon Abschnitte zu bilden, die als unbearbeiteter Gehäuseblock eingesetzt und dann entsprechend bearbeitet werden und in denen sämtliche Schaltelemente einschließlich des Dämpfungsbehälters untergebracht werden können. Die Verwendung einer Aluminiumknetlegierung ist auch insofern vorteilhaft, als dieses Material kaum poröse Stellen aufweist, so daß die Elemente der Schaltelemente und die als Leitungsverbindungen dienenden Bohrungen sehr eng beieinander angeordnet werden können. Die neue Baueinheit weist somit eine sehr kleine, schmale Bauweise auf, die sich vorteilhaft von dem voluminösen Achsliftkasten unterscheidet.

Es ist sogar möglich, die beiden als Drei/Zwei-Wege-Ventile ausgebildeten Umschaltventile mit ihren Achsen fluchtend im Gehäuseblock anzuordnen, so daß mit parallelem Achsversatz dazu das manuelle Schaltventil, das automatische Regelventil und der Dämpfungsbehälter untergebracht werden können.

Das manuell betätigbare Achsliftventil kann auch zwei parallel geschaltete, in der abgesenkten Stellung der Liftachse vom Balgdruck einer Fahrachse beaufschlagte Wirkflächen aufweisen, um auf die Steuerstange des Achsliftventils eine entsprechend große Kraft zur Einwirkung zu bringen, die manuell nicht überwindbar ist.

Wenn ein rechteckiger bzw. parallelepipedischer Gehäuseblock Verwendung findet, ist es vorteilhaft möglich, sämtliche Anschlüsse für die Verbindung der Baueinheit mit den Bälgen der Lift- und der Fahrachse, des Hebebalgs der Liftachse, einen Druckluftvorratsbehälter sowie mindestens einem Niveauregelventil im Bereich einer Seitenfläche vorzusehen. Zusätzlich kann auch noch die einzige Entlüfungsöffnung in diesem Bereich angeordnet werden. Zweckmäßig ist dann das Betätigungsglied des manuell betätigbaren Achsliftventils im Bereich einer anderen Seitenfläche aus dem Gehäuseblock herausgeführt, so daß der Betätigungsknopf gut erreichbar ist und von den Leitungsanschlüssen nicht behindert wird.

Dem Dämpfungsbehälter ist zweckmäßig ein Drosselventil vorgeschaltet, damit sich die durch die Fahrbewegungen in den Bälgen ergebenden Druckänderungen nicht in einem Hin- und Herschalten des Regelventils nachteilig bemerkbar machen können.

Das automatische Regelventil kann vorzugsweise großquerschnittig ausgebildet sein, so daß es damit auch gleichzeitig die Funktion eines Schnellöseventils übernimmt, dessen gesonderte Anordnung entbehrlich wird.

Das automatische Regelventil kann mit seinem Schaltkolben auf einer in ihrer Kraft einstellbaren Feder abgestützt sein, um den Übergangspunkt auf verschiedene Fahrzeugtypen einzustellen.

Die Erfindung wird anhand bevorzugter Ausführungsbeispiele weiter erläutert und beschrieben. Es zeigen:
- Figur 1: einen Querschnitt durch die Baueinheit in einer ersten Ausführungsform in der Stellung Vollbeladen, also mit abgesenkter Liftachse,
- Figur 2: eine Darstellung der Baueinheit mit ihren Anschlüssen zu den übrigen Teilen der Anlage,
- Figur 3: einen Schnitt durch die Baueinheit in einer zweiten Ausführungsform, in der Stellung Vollbeladen, also mit abgesenkter Liftachse und
- Figur 4: einen Schnitt durch eine weitere Ausführungsform der Baueinheit in der Stellung Leer, also bei angehobener Liftachse.

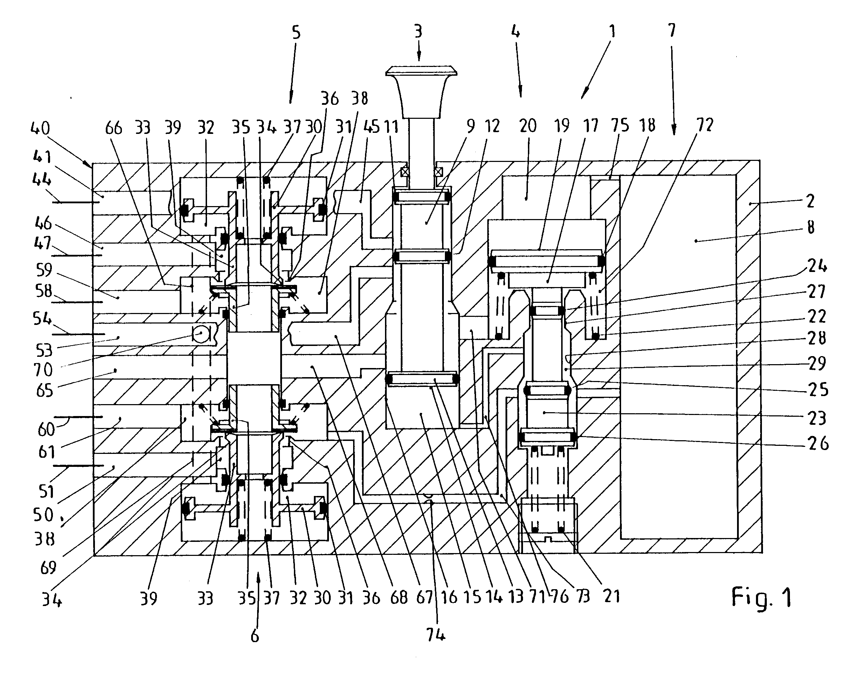

Figur 1 zeigt in einer ersten Ausführungsform die Baueinheit 1 in schematisierter Schnittdarstellung. Die Baueinheit 1 weist einen gemeinsamen Gehäuseblock 2 auf, in welchem als Schaltelemente ein manuell betätigbares Achsliftventil 3, ein Regelventil 4 sowie zwei je einer Fahrzeugseite zugeordnete Umschaltventile 5 und 6 angeordnet sind. Die Umschaltventile 5 und 6 sind mit ihren Achsen fluchtend angeordnet, während dazu parallel das Achsliftventil 3 und das Regelventil 4 vorgesehen ist. Ein Dämpfungsbehälter 7 ist als Bohrung 8 bzw. Hohlraum ebenfalls parallel hierzu im Gehäuseblock 2 angeordnet, wobei das Material des Gehäuseblocks zugleich auch das Gehäuse des Dämpfungsbehälters 7 bildet.

Das Achsliftventil 3 weist eine Steuerstange 9 auf, die nach außen abgedichtet aus dem Gehäuseblock 2 herausgeführt ist und in einem manuell verschiebbaren Betätigungsglied 10 endet. Die Steuerstange ist mit zwei Dichtungen 11 und 12 ausgestattet und besitzt an ihrem unteren Ende einen Schaltkolben 13, dessen Wirkfläche 14 im Anschluß an einen Schaltraum 15 von einer Dichtung 16 begrenzt wird. Die Dichtungen 11, 12 und 16 arbeiten mit der entsprechenden gestuften Gehäusebohrung zusammen, in welcher die Steuerstange 9 mit dem Schaltkolben 13 untergebracht ist.

Das automatische Regelventil 4 weist einen Regelkolben 17 mit einer von einer Dichtung 18 eingeschlossenen Wirkfläche 19 auf, die im Anschluß an eine Schaltkammer 20 vorgesehen ist. Der Regelkolben 17 ist auf einer einstellbaren Feder 21 abgestützt. Er kann zusätzlich auf einer nicht-einstellbaren Feder 22 abgestützt sein. Ein an dem Regelkolben 17 vorgesehener Fortsatz 23 ist gestuft ausgebildet und trägt Dichtungen 24, 25, 26, die nach Schieberbauart mit entsprechend gestuften Bohrungen zusammenarbeiten, um Leitungen miteinander zu verbinden bzw. voneinander abzusperren. Mit der Dichtung 24 arbeitet ein Bohrungsabschnitt 27 zusammen, während der Dichtung 25 ein Bohrungsabschnitt 28 zugeordnet ist. Zwischen den Dichtungen 24 und 25 wird ein Raum 29 gebildet.

Die beiden Umschaltventile 5 und 6 sind identisch ausgebildet und symmetrisch zueinander angeordnet. Beide Umschaltventile 5, 6 sind nach Art eines Drei/Zwei-Wege-Ventils ausgebildet und je einer Fahrzeugseite zugeordnet. So weisen die Umschaltventile 5 und 6 jeweils einen Steuerkolben 30, dessen Dichtung 31 einen Steuerraum 32 abschließt. Jeder Steuerkolben 30 weist einen durchbrochenen Fortsatz 33 auf, der mit seinem freien Rand einen Ventilsitz 34 bildet. Ein im Gehäuseblock jeweils federnd aufgehängter hohler Doppelventilkörper 35 arbeitet andererseits mit einem eingezogenen Rand 36, der ortsfest am Gehäuseblock 2 vorgesehen ist, zusammen. Der Doppelventilkörper 35 bildet mit dem Ventilsitz 34 ein Auslaßventil 35, 34 und mit dem Rand 36 ein Einlaßventil 35, 36. Jeder Steuerkolben 30 ist gehäuseseitig auf einer Feder 37 abgestützt. Um den Doppelventilkörper 35 herum ist eine Einlaßkammer 38 vorgesehen. Der Fortsatz 33 wird an der bezeichneten Stelle von einer Durchlaßkammer 39 umgeben.

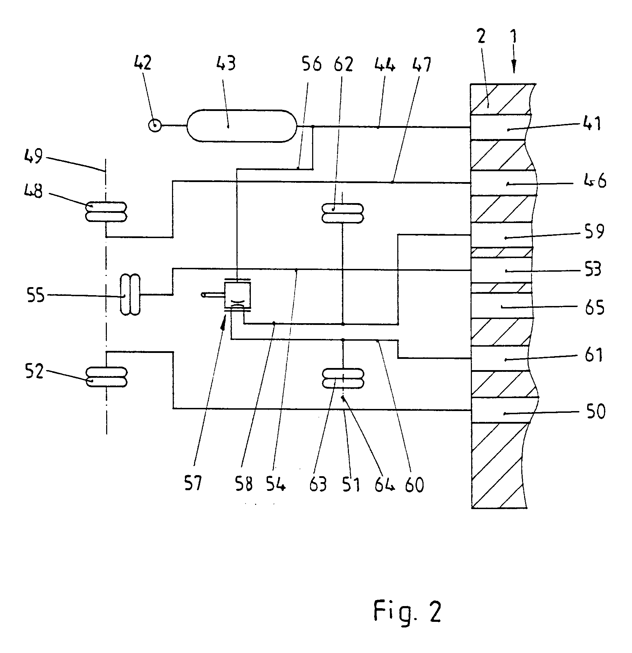

In einer Seitenfläche 40 des Gehäuseblocks 2, der selbst in Form eines Parallelepipeds ausgebildet ist, sind sämtliche Anschlüsse für die verschiedenen Schaltelemente untergebracht. Über einen ersten Anschluß 41 (siehe auf Figur 2) steht Druckluftvorrat aus einer Druckluftquelle 42 über einen Druckluftvorratsbehälter 43 und eine Leitung 44 an. Die Leitung 44 setzt sich in einem Kanal 45 fort, der zu einem Raum zwischen den Dichtungen 11 und 12 der Steuerstange 9 des Achsliftventils 3 führt. Von einem Anschluß 46 führt eine Leitung 47 zu einem Federbalg 48 einer Liftachse 49. Der Federbalg 48 ist der einen Fahrzeugseite zugeordnet. Analog führt von einem Anschluß 50 eine Leitung 51 zu einem Federbalg 52 der Liftachse 49, der der anderen Fahrzeugseite zugeordnet ist. An einem Anschluß 53 ist eine Leitung 54 angeschlossen, die zu einem Hebebalg 55 für die Liftachse 49 führt.

Über eine von der Leitung 44 (Figur 2) abzweigende Leitung 56 wird ein Niveauregelventil 57 mit Druckluft versorgt, von dem eine erste Leitung 58 zu einem Anschluß 59 am Gehäuseblock 2 der Baueinheit 1 führt. Entsprechend ist eine zweite Leitung 60 vom Niveauregelventil 57 ausgehend vorgesehen, die zu einem Anschluß 61 am Gehäuseblock 2 führt. Über die Leitungen 58 und 60 werden auch die beiden je einer Fahrzeugseite zugeordneten Federbälge 62 und 63 einer Fahrachse 64 mit Druckluft entsprechend dem Beladungszustand beschickt. Eine Entlüftungsöffnung 65 führt zur Atmosphäre und stellt die einzige Entlüftungsöffnung für sämtliche Schaltelemente im Gehäuseblock 2 dar.

Die am Anschluß 59 angeschlossene Leitung 58 steht in dauernder Verbindung mit der Einlaßkammer 38 des Umschaltventils 5, während die Durchlaßkammer 39 des Umschaltventils 5 dauernd mit dem Anschluß 46 und der Leitung 47 verbunden ist. Bei geöffnetem Einlaßventil 35, 36, wie in Figur 1 dargestellt, ist die Einlaßkammer 38 mit der Durchlaßkammer 39 verbunden, so daß der im Federbalg 62 von dem Niveauregelventil 57 eingesteuerte Balgdruck auch in dem Federbalg 48 der Liftachse wirksam ist. Das Auslaßventil 34, 35 ist geschlossen. Der Steuerkolben 30 des Umschaltventils 5 wird durch die Kraft der Feder 37 in dieser Stellung gehalten, da der Steuerraum 32 entlüftet ist. Zu diesem Zweck ist der Steuerraum 32 über eine gestrichelt dargestellte Bohrung 66 mit einer Leitung 67 verbunden, die über den Zwischenraum zwischen den Dichtungen 12 und 16 der Steuerstange 9 Anschluß an einen Kanal 68 hat, der mit der Entlüftungsöffnung 65 verbunden ist. Analoges gilt auch für die entsprechenden Teile des Umschaltventils 6, von dessen Steuerraum 32 eine Leitung 69 zu der Leitung 67 führt. Über einen Verbindungsknoten 70 haben die beiden Leitungen 66 und 69 gleichzeitig auch Verbindung zum Anschluß 53 und zur Leitung 54, die zum Hebebalg 55 der Liftachse 49 führt, so daß auch der Hebebalg 55 entlüftet ist.

Eine Entlüftungsleitung 71 hat dauernd Anschluß an den Kanal 68 und entlüftet damit eine Rückkammer 72 an dem Regelkolben 17 des Regelventils 4.

Von der Einlaßkammer 38 des Umschaltventils 6 führt eine Leitung 73, in der ein Drosselventil 74 oder eine als Verengung wirkende Drosselstelle vorgesehen ist, einerseits zu dem Regelkolben 17 an der ersichtlichen Stelle und andererseits in die Bohrung 8 des Dämpfungsbehälters 7. Die Bohrung 8 des Dämpfungsbehälters 7 steht über eine Verbindungsleitung 75 mit der Schaltkammer 20 für die Wirkfläche 19 des Regelkolbens 17 des Regelventils 4 in Verbindung. Von dem Raum 29 des Regelventils 4 führt schließlich eine Steuerleitung 76 zu dem Schaltraum 15 für die Wirkfläche 14 des Achsliftventils 3.

Die Wirkungsweise der Baueinheit 1 mit den übrigen Teilen, wie sie in den Figuren 1 und 2 dargestellt sind, ist folgende: die Teile sind in der Stellung Vollbeladen und somit mit abgesenkter Liftachse 49 dargestellt. Über die Leitung 44 und den Anschluß 41 sowie die Leitung 45 steht Druckluft in der Verengung der Steuerstange 9 zwischen den Dichtungen 11 und 12 an. Da die Dichtungen 11 und 12 auf gleichem Durchmesser angeordnet sind, ergibt sich keine resultierende Kraft auf die Steuerstange 9. Die Steuerstange 9 befindet sich in der herausgezogenen Endstellung. Entsprechend dem Beladungszustand Vollbeladen hat das Niveauregelventil über die Leitung 58 einerseits den Federbalg 52 der Fahrachse 64 entsprechend aufgefüllt und andererseits gelangt diese Druckluft auch zum Anschluß 59 sowie über das geöffnete Einlaßventil 35, 36 des Umschaltventils 5 in die Leitung 47 und damit in den Federbalg 48 der Liftachse. In den Federbälgen 62 und 48 herrscht somit ein gleicher Druck.

Entsprechend wird der Federbalg 63 der Fahrachse 64 über die Leitung 60 vom Niveauregelventil 57 ebenfalls mit diesem Druck versorgt, der andererseits über den Anschluß 61 und das geöffnete Einlaßventil 35, 36 des Umschaltventils 6 in die Leitung 51 und von dort zum Federbalg 52 der Liftachse 49 gelangt. In allen Federbälgen 48, 62, 52, 63 herrscht damit gleicher Druck und die Fahrachse 34 trägt ebenso wie die Liftachse 49. Der Hebebalg 55 an der Leitung 54 ist an die Leitung 67 angeschlossen, die Verbindung zur Leitung 68 und damit zur Entlüftungsöffnung 65 hat.

Der Druck in der Einlaßkammer 38 des Umschaltventils 6 steht über die Leitung 73 mit dem eingeschalteten Drosselventil auch in der Bohrung 8 des Dämpfungsbehälters 7 an, so daß auch die Schaltkammer 20 entsprechend belüftet ist. Die Wirkfläche 19 des Regelkolbens 17 ist so ausgebildet und auf die Kraft der Federn 21 und 22 abgestimmt, daß der Regelkolben 17 in seiner unteren Stellung gehalten ist, so daß ein zwischen der Dichtung 24 und dem Bohrungsabschnitt 27 gebildetes Auslaßventil geschlossen ist, so daß der in der Leitung 73 anstehende Druck auch in der Steuerleitung 76 und damit im Schaltraum 15 wirksam ist. Die hierdurch auf die Wirkfläche 14 des Schaltkolbens 13 ausgeübte Kraft ist so groß, daß ein manuelles Verschieben der Steuerstange 9 durch Kraftangriff am Betätigungsglied in die andere Stellung nicht möglich ist.

Erst, wenn das Fahrzeug ganz oder teilweise entladen wird, jedenfalls in einen Beladungszustand, der unterhalb des durch die Kraft der Feder 21 am Regelventil 4 eingestellten Umschaltpunkts liegt, hat das Niveauregelventil 57 den Druck in den Federbälgen 48, 62, 63 und 53 und damit auch in der Schaltkammer 20 soweit erniedrigt, daß die Federn 21 und 22 den Regelkolben 17 nach oben in seine andere Endstellung verfahren. Dabei öffnet das Aulaßventil 24, 27 und die Dichtung 25 fährt in den Bereich des Bohrungsabschnitts 28 ein, so daß die Steuerleitung 76 damit entlüftet wird, während in der Leitung 73, im Dämpfungsbehälter 7 sowie in der Schaltkammer 20 der Balgdruck wirksam bleibt. Jetzt ist es möglich, das manuelle Achsliftventil 3 durch Niederdrücken des Betätigungsglieds 10 in seine andere Stellung zu verschieben, wodurch der zwischen den Dichtungen 11 und 12 anstehende Vorratsdruck in die Leitung 67 und über den Anschluß 53 in die Leitung 54 zum Hebebalg 55 gelangt, so daß die Liftachse 49 angehoben wird. Gleichzeitig gelangt Vorratsdruck über den Verbindungsknoten 70 in die Leitungen 66 und 69 und damit in die Steuerräume 32 der beiden Umschaltventile 5 und 6, so daß diese umschalten. Dabei werden die Einlaßventile 35, 36 geschlossen und nachfolgend die Auslaßventile 34, 35 geöffnet, so daß die Federbälge 48 und 52 durch die hohlen Doppelventilkörper 35 der Umschaltventile 5 und 6 hindurch sowie über den Anschluß am Kanal 68 und damit über die Entlüftungsöffnung 65 entlüftet werden.

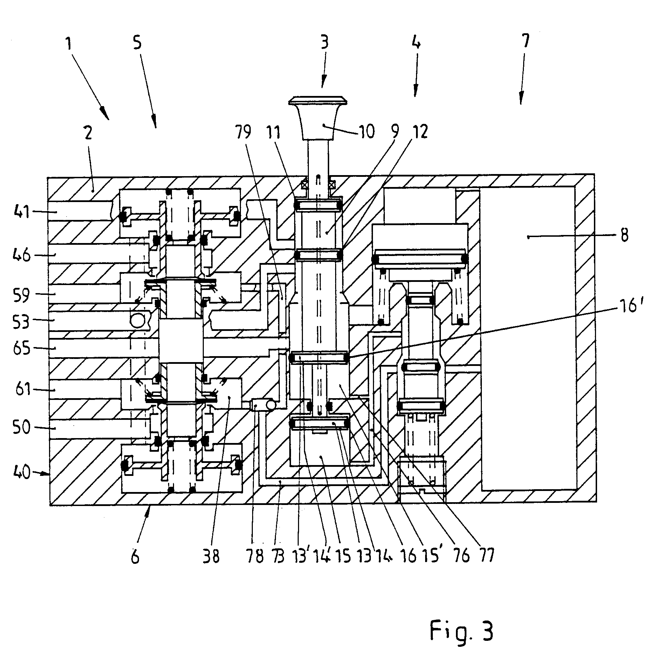

Das Ausführungsbeispiel der Baueinheit 1 gemäß Figur 3 ist in weiten Bereichen mit dem Ausführungsbeispiel der Figur 1 übereinstimmend. Die Steuerstange 9 des Achsliftventils 3 weist hier jedoch zwei Schaltkolben 13 und 13' auf, so daß auch zwei in die gleiche Richtung wirkende Wirkflächen 14 und 14' vorgesehen sind. Entsprechend ist auch neben dem Schaltraum 15 ein weiterer Schaltraum 15' vorgesehen. Der Schaltraum 15' ist über eine Abzweigleitung 77 mit der Steuerleitung 76 verbunden.

Die Leitung 73 ist über ein Zweiwegeventil 78 einerseits an die Einlaßkammer 38 des Umschaltventils 6 und andererseits über eine Leitung 79 an die Einlaßkammer 38 des Umschaltventils 5 angeschlossen, so daß in der Leitung 73 der jeweils höhere Druck zur Aussteuerung gebracht wird. Dies ist dann sinnvoll, wenn nicht nur ein Niveauregelventil 57 für beide Fahrzeugseiten, sondern zwei getrennte Niveauregelventile, jeweils einer Fahrzeugseite zugeordnet, eingesetzt werden.

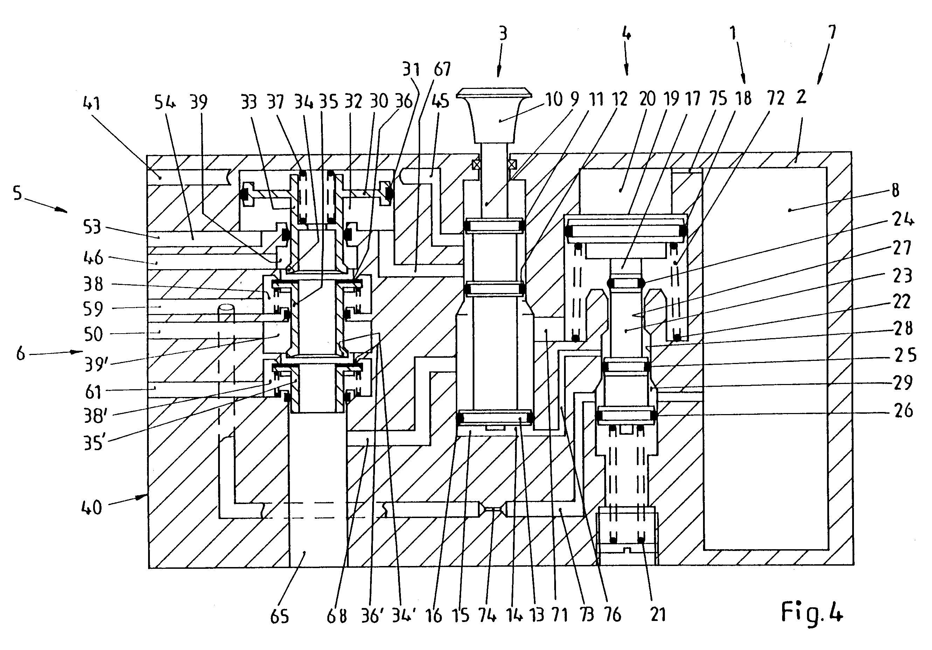

Figur 4 zeigt eine weitere Ausführungsform der Baueinheit 1, wobei das Achsliftventil 3 und das Regelventil 4 gemäß der Ausführungsform nach Figur 1 ausgebildet sind. Die beiden Umschaltventile 5 und 6 sind hier anders ausgebildet, und zwar gleichsinnig hintereinander, wobei nur ein einziger Steuerkolben 30 für beide Umschaltventile 5 und 6 vorgesehen ist. Funktionsgleiche Teile sind mit gleichen Bezugszeichen versehen. In der in Figur 4 dargestellten Stellung der Teile ist die Steuerstange 9 manuell in ihre beiden Stellungen verschiebbar. Dargestellt ist die Stellung leer oder wenig beladen mit angehobener Liftachse 49. Nach einem Herausziehen der Steuerstange 9 in die andere Stellung wird die Liftachse 49 abgesenkt und die Federbälge 48 und 52 entsprechend belüftet, wobei verständlicherweise die Auslaßventile 34, 35 und 34', 35' schließen und die Einlaßventile 35, 36 und 35', 36' öffnen.

## Patentansprüche

1. Baueinheit zum Steuern einer Liftachse (49) an einem mehrachsigen Nutzfahrzeug, mit einem manuell betätigbaren Achsliftventil (3), einem automatischen Regelventil (4), zwei jeweils einer Fahrzeugseite zugeordneten Umschaltventilen (5, 6) und einem Dämpfungsbehälter (7) sowie den zugehörigen Leitungsverbindungen für die Schaltelemente (3, 4, 5, 6) und den Dämpfungsbehälter (7), dadurch gekennzeichnet, daß sämtliche Schaltelemente (3, 4, 5, 6) sowie der Dämpfungsbehälter (7) in einem gemeinsamen Gehäuseblock (2) untergebracht sind und die Leitungsverbindungen (45, 67, 68, 66, 69, 70, 73, 71, 76, 75) als Bohrungen im Gehäuseblock (2) ausgebildet sind.

2. Baueinheit nach Anspruch 1, dadurch gekennzeichnet, daß das manuell betätigbare Achsliftventil (3) ein einziges, in zwei Stellungen überführbares Betätigungsglied (10) aufweist.

3. Baueinheit nach Anspruch 1 oder 2, dadurch gekennzeichnet, daß am Gehäuseblock (2) eine gemeinsame Entlüfungsöffnung (65) für alle Schaltelemente (3, 4, 5, 6) vorgesehen ist.

4. Baueinheit nach einem oder mehreren der Ansprüche 1 bis 3, dadurch gekennzeichnet, daß als gemeinsamer Gehäuseblock (2) ein Abschnitt eines Strangpreßprofils vorzugsweise aus einer Aluminiumknetlegierung dient.

5. Baueinheit nach einem oder mehreren der Ansprüche 1 bis 4, dadurch gekennzeichnet, daß die beiden Umschaltventile (5, 6) als Drei/Zwei-Wege-Ventile ausgebildet sind und mit ihren Achsen fluchtend im Gehäuseblock (2) angeordnet sind.

6. Baueinheit nach einem oder mehreren der Ansprüche 1 bis 5, dadurch gekennzeichnet, daß das manuell betätigbare Achsliftventil (3) zwei parallel geschaltete, in der abgesenkten Stellung der Liftachse (49) vom Balgdruck einer Fahrachse (64) beaufschlagte Wirkflächen (14, 14') aufweist.

7. Baueinheit nach einem oder mehreren der Ansprüche 1 bis 6, dadurch gekennzeichnet, daS der Gehäuseblock (2) die Form eines Parallelepipeds aufweist und sämtliche Anschlüsse (41, 46, 59, 53, 61, 50) für die Verbindung der Baueinheit (1) mit den Bälgen (48, 52, 62, 63) der Lift- und der Fahrachse, des Hebebalgs (55) der Liftachse (49), einem Druckluftbehälter (43) sowie mindestens einem Niveauregelventil (57) im Bereich einer Seitenfläche (40) vorgesehen sind.

8. Baueinheit nach einem oder mehreren der Ansprüche 1 bis 7, dadurch gekennzeichnet, daß dem Dämpfungsbehälter (7) ein Drosselventil (74) vorgeschaltet ist.

9. Baueinheit nach einem oder mehreren der Ansprüche 1 bis 8, dadurch gekennzeichnet, daß das automatische Regelventil (4) großquerschnittig ausgebildet ist.

10. Baueinheit nach Anspruch 9, dadurch gekennzeichnet, daß das automatische Regelventil (4) mit seinem Schaltkolben (17) auf einer in ihrer Kraft einstellbaren Feder (21) abgestützt ist.

## Claims

1. An assembly to control a liftable axle (49) of a vehicle, the vehicle having a plurality of axles, comprising a manually operable lift valve (3), an automatically operated control valve (4), two change-over valves (5, 6), one each for each side of the vehicle, a dampening reservoir (7), and conduits for the connection of the control elements (3, 4, 5, 6) and the dampening reservoir (7), characterized, in that all of the control elements (3, 4, 5, 6) and the dampening reservoir (7) are located within a common housing block (2), and conduits (45, 67, 68, 66, 69, 70, 73, 71, 76, 75) are provided as bores within housing block (2).

2. The assembly of claim 1, characterized, in that said lift valve (3) comprises a knob (10) displacable into two positions.

3. The assembly of claim 1 or 2, characterized, in that said housing block (2) comprises a common air exhaust opening (65) for each of the control elements (3, 4, 5, 6).

4. The assembly of one or more of claims 1 to 3, characterized, in that said housing block (2) is formed as an extrusion, said extrusion comprisinge a wrought aluminium alloy.

5. The assembly of one or more of claims 1 to 4, characterized, in that the two change-over valves (5, 6) are 3/2-way valves, said valves being positioned with their axes in alignment with each other within housing block (2).

6. The assembly of one or more of claims 1 to 5, characterized, in that the manually operable lift valve (3) comprises two surfaces (14, 14') parallel to one another, said surfaces being biased by the compressed air pressure of a pneumatic spring of a fixed axle (64), the axle being in a lowered position with respect to the positions of the lifable axle (49).

7. The assembly of one or more of claims 1 to 6, characterized, in that the housing block (2) is shaped as a parallelepiped, wherein all of the openings (41, 46, 59, 53, 61, 50) for the connection of the assembly (1) to the pneumatic springs (48, 52, 62, 63) of the lift axle and the fixed axle, and of the lift bellow (55) of liftable axle (49), and of the compressed air reservoir (43), and of at least one leveling valve (57), are provided in one common surface (40) of the housing block.

8. The assembly of one or more or claims 1 to 7, characterized, in that a throttle valve (74) is provided at the entrance of dampening reservoir (7).

9. The assembly of one or more of claims 1 to 8, characterized, in that said automatic control valve (4) has a large cross section.

10. The assembly of claim 9, characterized, in that automatic control valve (4) has a piston (17), said piston being biased by the force of an adjustable spring (21).

## Revendications

1. Unité de construction de commande d'un essieu élévateur (49) d'un véhicule utilitaire à plusieurs essieux, comportant une vanne de levage d'essieu (3) actionnée manuellement, une vanne de régulation (4) automatique, deux vannes de commutation (5, 6) associées chacune à un côté du véhicule et un réservoir d'amortissement (7) ainsi que les liaisons de conduites correspondantes pour les éléments de commutation (3, 4, 5, 6) et pour le réservoir d'amortissement (7), caractérisée en ce que tous les éléments de commutation (3, 4, 5, 6) ainsi que le réservoir d'amortissement (7) sont logés dans un bloc carter (2) commun et les liaisons de conduites (45, 67, 68, 66, 69, 70, 73, 71, 76, 75) sont réalisées sous la forme d'alésages pratiqués dans le bloc carter (2).

2. Unité de construction selon la revendication 1, caractérisée en ce que la vanne de levage d'essieu (3) actionnée manuellement comporte un seul organe d'actionnement (10) pouvant passer dans deux positions.

3. Unité de construction selon la revendication 1 ou 2, caractérisée en ce que sur le bloc carter (2) est prévu un orifice de purge (65) commun pour tous les éléments de commutation (3, 4, 5, 6).

4. Unité de construction selon une ou plusieurs des revendications 1 à 3, caractérisée en ce que comme bloc carter (2) commun on a recours à une portion d'un profilé extrudé, fait de préférence dans un alliage corroyé d'aluminium.

5. Unité de construction selon une ou plusieurs des revendications 1 à 4, caractérisée en ce que les deux vannes de commutation (5, 6) sont des vannes de distribution à trois/deux voies et sont montées avec leurs axes alignés dans le bloc carter (2).

6. Unité de construction selon une ou plusieurs des revendications 1 à 5, caractérisée en ce que la vanne de levage d'essieu (3) actionnée manuellement comporte deux faces actives (14, 14') montées en parallèle, sollicitées, dans la position abaissée de l'essieu élévateur (49), par la pression de soufflet d'un essieu de roulement (64).

7. Unité de construction selon une ou plusieurs des revendications 1 à 6, caractérisée en ce que le bloc carter (2) a la forme d'un parallélépipède et tous les raccords (41, 46, 59, 53, 61, 50) pour la liaison de l'unité de construction (1) avec les soufflets (48, 52, 62, 63) de l'essieu élévateur et de l'essieu de roulement, du soufflet de levage (55) de l'essieu élévateur (49), avec un réservoir d'air comprimé (43) ainsi qu'avec au moins une vanne de réglage de niveau (57), sont prévus dans la zone d'une face latérale (40).

8. Unité de construction selon une ou plusieurs des revendications 1 à 7, caractérisée en ce qu'une vanne d'étranglement (74) est montée en amont du réservoir d'amortissement (7).

9. Unité de construction selon une ou plusieurs des revendications 1 à 8, caractérisée en ce que la vanne de réglage (4) automatique a une grande section transversale.

10. Unité de construction selon la revendication 9, caractérisée en ce que la vanne de réglage (4) automatique prend appui avec son piston de commutation (17) sur un ressort (21), de force réglable.
